(19) Europäisches Patentamt / European Patent Office / Office européen des brevets

(11) **EP 4 211 442 B1**

(12) **EUROPEAN PATENT SPECIFICATION**

(45) Date of publication and mention
of the grant of the patent:
**15.10.2025   Bulletin 2025/42**

(21) Application number: **22717682.3**

(22) Date of filing: **16.03.2022**

(51) International Patent Classification (IPC):
***G01N 17/04*** *(2006.01)*

(52) Cooperative Patent Classification (CPC):
**G01N 17/04; G01N 17/006; G01N 27/04**

(86) International application number:
**PCT/PL2022/050015**

(87) International publication number:
**WO 2022/197194 (22.09.2022 Gazette 2022/38)**

(54) **CORROSION RATE MEASURING PROBE**

SONDE ZUR KORROSIONSGESCHWINDIGKEITSMESSUNG

SONDE DE MESURE DE DÉBIT DE CORROSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2021   EP 21461525**

(43) Date of publication of application:
**19.07.2023   Bulletin 2023/29**

(73) Proprietor: **Orlen S.A.**
**09-411 Plock (PL)**

(72) Inventors:
 • **DAROWICKI, Kazimierz**
  **80-174 Gdansk (PL)**
 • **ORLIKOWSKI, Juliusz**
  **81-389 Gdynia (PL)**
 • **LENTKA, Grzegorz**
  **80-238 Gdansk (PL)**
 • **CIESLIK, Mateusz**
  **10-762 Olsztyn (PL)**
 • **DUL, Andrzej**
  **80-288 Gdansk (PL)**
 • **GOSPOS, Radoslaw**
  **09-410 Plock (PL)**
 • **LUKSA, Iwona**
  **09-410 Plock (PL)**

(74) Representative: **Witek, Rafal**
**WTS Patent Attorneys**
**Witek, Sniezko & Partners**
**ul. Weigla 12**
**53-114 Wroclaw (PL)**

(56) References cited:
**WO-A1-83/03007     GB-A- 2 150 300**

 • **COSASCO: "(ER) Electrical Resistance Probes", 17 May 2016 (2016-05-17), XP055745519, Retrieved from the Internet <URL:https://www. corrosionservice.com/wp-content/uploads/2017/ 03/COSASCO_ER-Electrical-Resistance-Probes. pdf> [retrieved on 20201030]**
 • **A I MARSHAKOV ET AL: "Monitoring of the external corrosion of buried pipelines", JOURNAL OF CORROSION SCIENCE AND ENGINEERING, 1 January 2015 (2015-01-01), XP055745821, Retrieved from the Internet <URL:https:// www.corrosionservice.com/wp- content/uploads/2017/03/COSASCO_ER- Electrical-Resistance-Probes.pdf> [retrieved on 20201102]**

## Description

The invention relates to a probe for measuring the corrosion rate of metal, particularly occurring in corrosive environment rich in hydrogen in atomic form.

The phenomenon of corrosive degradation of metal industrial installations is well known and attempts have been made to prevent it using various safety measures and constant control of corrosion level of such installations. One of the corrosion phenomena posing a more serious risk is the so-called hydrogen embrittlement which is the result of atomic hydrogen penetrating into the crystal structure of metal. In addition to the rapidly progressing decline in mechanical strength of the hydrogenated metal, this phenomenon also intensifies other types of corrosion. The hydrogenation of metal in the industrial installation originates from hydrogen present in atomic form, formed as a result of corrosion processes, or from hydrogen present in molecular form in the environment where the temperature exceeds 200°C. One of the commonly used methods of chemical corrosion rate testing is recording the increase in electrical resistance of a metal element introduced into a corrosive environment, resulting from corrosion cavities. Since the electrical resistance of metal has a strong temperature dependence, the current measured resistance of the corroding metal is compared with the resistance of an identical metal element located in the vicinity and thus under the same thermal conditions but protected from the influence of corrosive agents. Both metal elements, the corroding one and the reference one, are placed in the measuring probe, which is located in selected places in the installation monitored for corrosion. This type of probe, available on the market, is disclosed, for example, in publication US6919729B2.

The hydrogenation process of steel based on the mechanism of: hydrogen embrittlement (HE), high temperature hydrogen attack (HTHA) is diagnosed mainly based on non-destructive testing methods. Due to the fact that the damage occurs most often locally, detectability of possible danger is low. In the case of cracks on the steel surface involved in hydrogen embrittlement, the following diagnostic methods are used: ultrasonic testing (UT), wet fluorescent magnetic particle testing (WFMT). To diagnose internal cracks, penetration testing (PT) and magnetic particle testing (MT) are used. All of the above methods for diagnosis and monitoring do not meet the market needs, because, in most cases, these studies are performed on a material that has undergone extensive degradation. In most cases, the diagnostic methods are used during maintenance downtimes. The result of degradation is analysed, and the causes of corrosion are not investigated. Therefore, it is not possible to counteract the corrosion processes. Additionally, the causes of degradation in the form of temporary malfunctions in the technological stream are often unknown. Another method is to measure the partial pressure of hydrogen in refinery streams. This solution allows determining the level of risk of high temperature hydrogen attack. However, this type of measurement does not allow determining the actual level of degradation. Correlation between the actual state and the data resulting from the hydrogen content in the stream and the temperature is not always present. This type of measurement does not allow determining the hydrogenation level in case of corrosion in the wet hydrogen sulphide environment, due to the absence of hydrogen in molecular form in the refinery streams. Another similar solution is to measure the partial pressure of hydrogen measured after the hydrogen passes through a sensor element made of structural steel. In this case, the presence of hydrogen indicates that hydrogen passed through the structural material. This type of approach is very imprecise, because the passage of hydrogen through the material is not highly correlated with its absorption. The absorption of hydrogen in steel is not linear as a function of time, therefore the correlation of hydrogen pressure measurements performed is not precise. Probe for resistive measurement of molecular hydrogen concentration is disclosed, among others, in publication GB850064. Publication GB215300A discloses a probe for resistive measurement of corrosion cavities, comprising two or three measuring electrodes, in which the elements exposed to the corrosive agents differ in thickness. In the initial step, the corrosion rate measurement is performed using the thinnest electrode, while the thicker second electrode and, optionally, an even thicker third electrode are subjected only to corrosion cavities, reducing their thickness. Because an excessive reduction of thickness of the measuring element has a negative effect on the measuring sensitivity of the resistive electrode, beyond a certain level of corrosion cavities of the first electrode, it is disconnected from the measuring system and further corrosion rate measurement is conducted using the second electrode and the third electrode, if needed. This solution radically increases the possible operating time of such a probe, however the mentioned publication does not contain any teachings how such solution can be used for measuring of hydrogen corrosion, especially for simultaneous measuring of corrosion cavity rate and the hydrogenation of metal.

Publication entitled "(ER) Electrical Resistance Probes" [Cosasco, May 17, 2016, XP055745519] discloses a series of resistive corrosion probes made of various materials and used to measure corrosion cavity rates, however this publication also does not contain teachings how such electrodes can be used to measure the level of hydrogenation of a metal.

Publication authored by A I Marshakow et al., entitled "Monitoring of external corrosion of buried pipelines" [Journal of Corrosion Science and Engineering, 1.I.2015, XP055745821] discloses the principles of corrosion cavity measurement and electrochemical measurement of hydrogenation of pipeline material using the so called Devanathan-Stachurski cell with a metal membrane, through which hydrogen diffuses. Another example of electrochemical measurement of hydrogen stream diffusing through a metal membrane is disclosed in publication No. WO 83/03007.

The object of the invention is to create a probe that will allow simultaneous measurement of the rate of corrosion causing material cavities, as well as corrosion resulting from hydrogenation.

This object is achieved by a probe according to the invention comprising at least one assembly of resistive elements connected electrically to each other, the assembly is comprised of one resistive element exposed to corrosive agents and one reference resistive element isolated from said corrosive agents, wherein both resistive elements of each resistive assembly are mechanically mounted in a common probe body and, during the measurement, have substantially the same temperature. The invention is based on the fact that the probe comprises the first and second resistive element exposed to corrosive agents and respective first and second reference resistive element, corresponding to said elements. The first resistive element exposed to corrosive agents and the first reference resistive element are made of non-alloy steel with a carbon content not exceeding 0.002% by weight and manganese content not exceeding 0.05% by weight. The second resistive element exposed to corrosive agents and the second reference resistive element are made of non-alloy steel with a carbon content in range of 0.4% to 1% by weight and manganese content not exceeding 0.05% by weight.

In one of variants of the invention, all the resistive elements are made of wire. The length of the first resistive element exposed to corrosive agents is equal to the length of the first reference resistive element. The cross-section area of the first resistive element exposed to corrosive agents is equal to the cross-section area of the first reference resistive element. The length of the second resistive element exposed to corrosive agents is equal to the length of the second reference resistive element. The cross-section area of the second resistive element exposed to corrosive agents is equal to the cross-section area of the second reference resistive element.

In further variants of the invention, the cross-section areas of all resistive elements are the same and/or lengths of all resistive elements are the same.

In another variant of the invention, resistive elements of the probe are made of wire with a square cross-section.

In another variant of the invention, the length of the wire section forming the resistive element is from two hundred and fifty to two hundred and seventy times greater than the length of the side of the square defining the outline of the cross-section of said wire.

In another variant of the invention, the first resistive element exposed to corrosive agents and the first reference resistive element form two parts of the first measuring electrode in a form of a continuous section of wire, whereas the second resistive element exposed to corrosive agents and the second reference resistive element form two parts of the second measuring electrode in a form of a continuous section of wire.

In another variant of the invention, in each measuring electrode, the resistive element exposed to corrosive agents has an elongated "U" shape, and thus comprises its first and second arm. The reference resistive element in the same measuring electrode has a form of a rectilinear section of wire which is an elongation of the second arm of the resistive element exposed to corrosive agents.

In another variant of the invention, both measuring electrodes are located parallel to each other, wherein the shape and dimensions of both electrodes are the same.

In another variant of the invention, the measuring electrodes are rotated relative to each other by ninety angular degrees.

In another variant of the invention, the probe body is formed by a cylindrical member with through holes for the measuring electrodes, wherein both arms of each measuring electrode are located on one side of the cylindrical member, whereas the reference resistive elements of said electrodes are located on the other side of the cylindrical member.

In another variant of the invention, both reference resistive elements are located inside a tubular member connected to the body, wherein the space between the measuring electrodes and the inside of the tubular member and the inside of the through holes of the cylindrical member is filled with an agent resistant to corrosive agents.

In another variant of the invention, both arms of both measuring electrodes are located inside a perforated cover connected to the body.

In yet another variant of the invention, the cylindrical member comprises a first, second, third and fourth through hole, which are arranged evenly around the axis of the cylindrical member, wherein the free end of the first arm of the first electrode is located in the first through hole, while the end of the second arm of the first electrode is located in the third through hole, whereas the free end of the first arm of the second electrode is located in the second through hole, while the end of the second arm of the second electrode is located in the fourth through hole.

The invention allows determining the uniform corrosion rate and hydrogenation in real time (online). This enables optimisation of the amount of chemicals and a better assessment of the corrosion inhibitors and other anti-corrosive agents used. The invention increases the safety of the process and the crew operating the industrial installation and provides the possibility of planning maintenance downtimes and reducing failures, by anticipating the necessity to replace structural elements due to corrosion cavities in their thickness. Using real time measurement, the invention also facilitates assessment of the current corrosion aggressiveness of various raw materials and immediate response in case of detecting a corrosion risk.

The possibility to determine the hydrogen content of the structural material facilitates assessment of the effect of technological parameters of the process and the type of raw material on the hydrogen penetration into the material of the installation, and, as a result, it is possible to assess the degree of decrease in the strength parameters of the structural material resulting from the hydrogen content and to verify whether this decrease has not already reached a critical value.

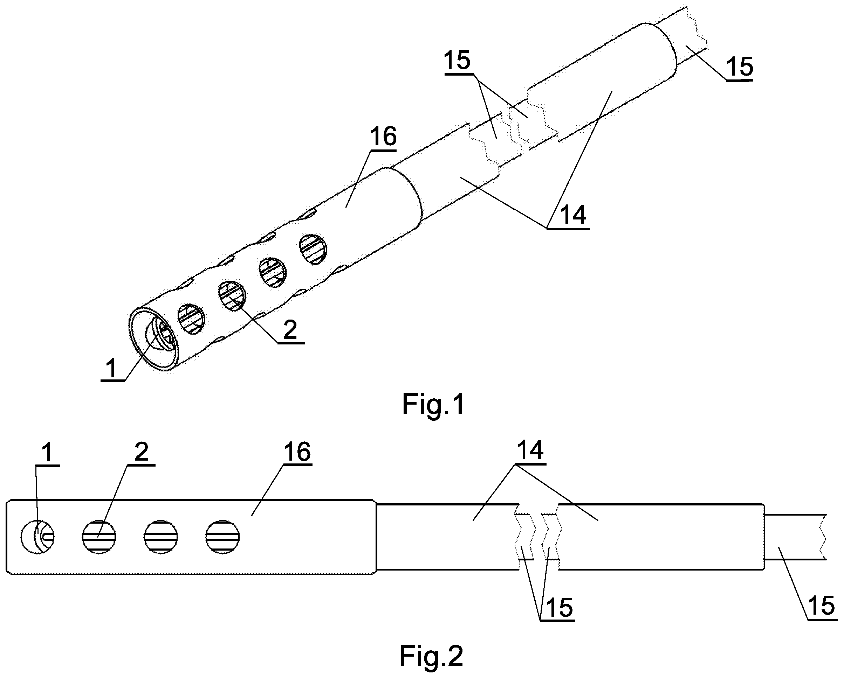

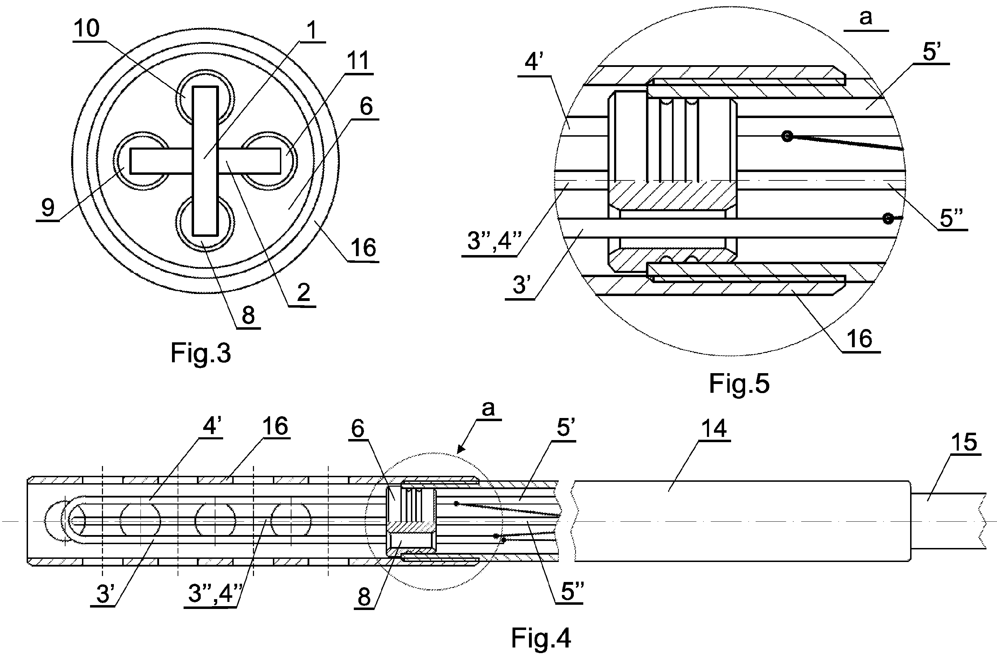

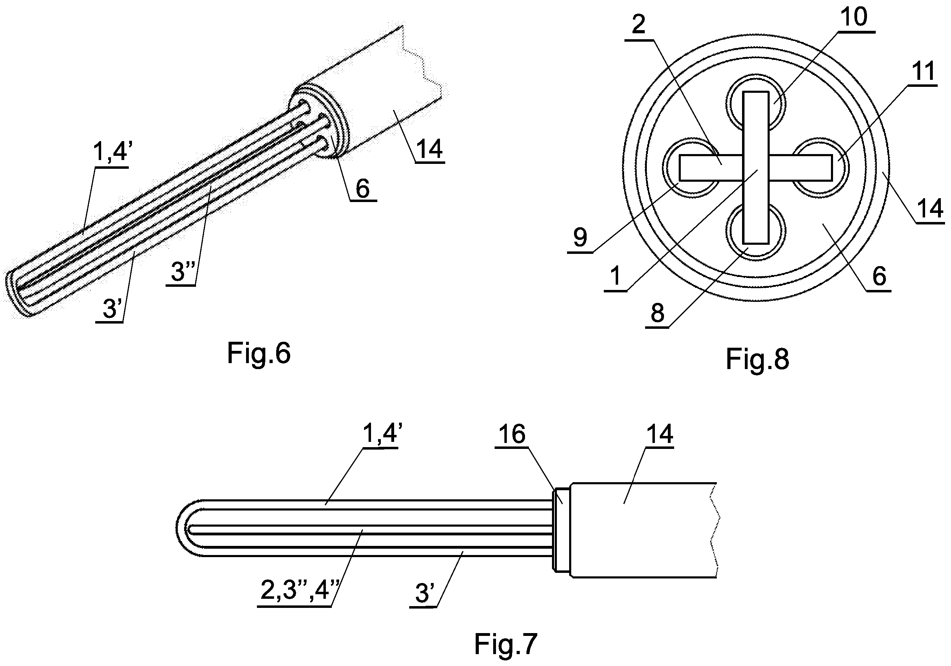

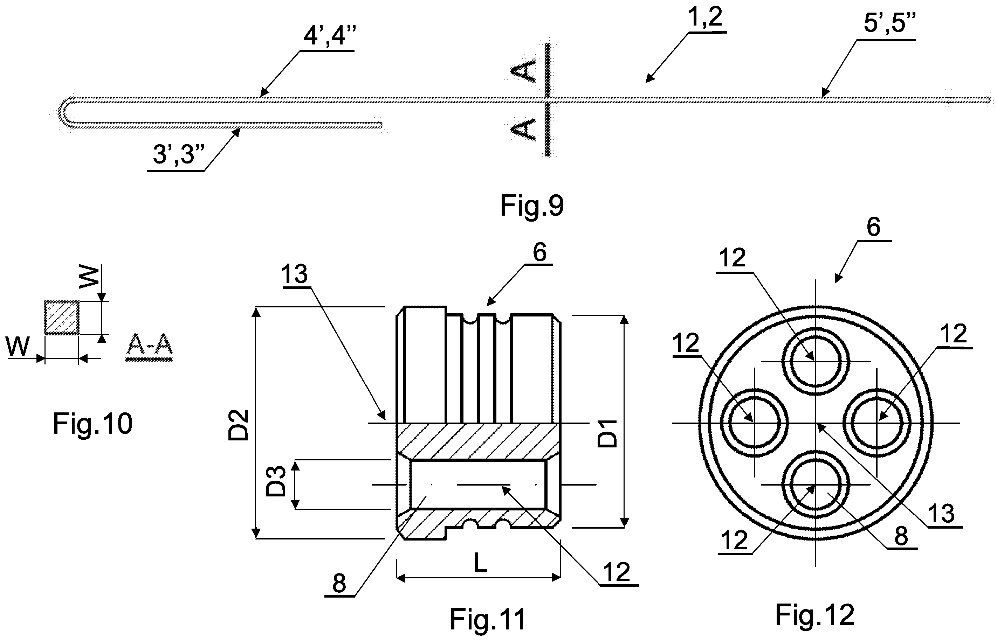

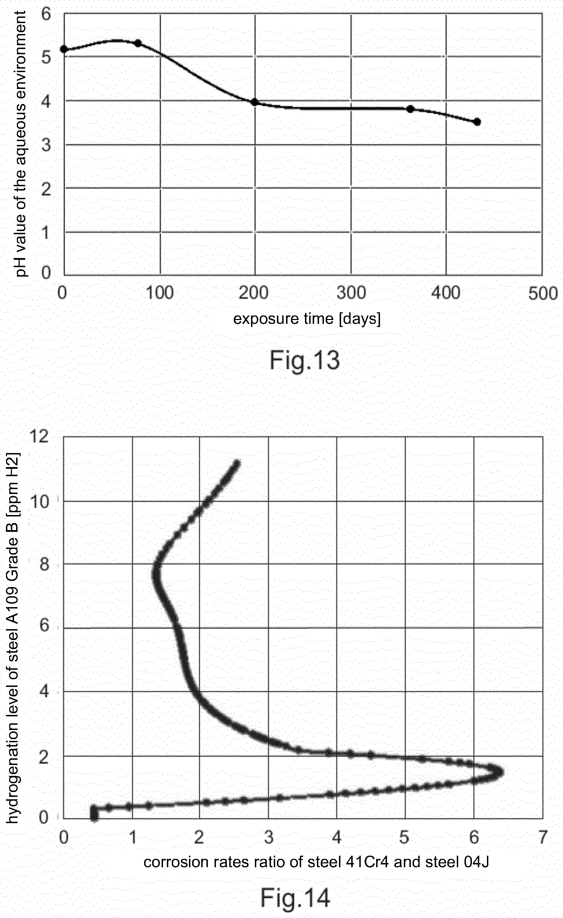

The embodiment of the invention has been described in detail and illustrated in the attached drawings, without keeping the same scale in the individual figures. Fig.1 shows a front axonometric view of the probe according to the invention, Fig.2 shows a side view of the probe, Fig.3 shows a front view of the probe, Fig.4 shows a longitudinal cross-section of the probe and Fig.5 shows an enlarged portion of the cross-section in Fig.4. Fig.6, Fig.7, and Fig.8 show portions of probe views in Fig.1, Fig.2, and Fig.3, respectively, but with the electrode cover removed. Fig.9 shows a side view of the wire electrode of the probe, and Fig.10 shows the shape of wire cross-section of the electrode with a transverse plane to the wire axis. Fig.11 shows a side view of the probe body of Fig.1, and Fig.12 shows the front view of the body. Fig.13 shows a change of the pH value of the aqueous environment as a function of time occurring during calibration of the probe according to the invention, and Fig.14 shows the calibration curve of hydrogenation of A109 Grade B steel.

The exemplary probe according to the invention has two resistive measuring electrodes 1 and 2. One part of such electrode is exposed to corrosive agents, while its other part is insulated from this exposure and constitutes a reference element. The corrosion rate measurement in the probe according to the invention involves comparing the electrical resistance of the resistive element of the measuring electrode exposed to corrosive agents with the electrical resistance of the reference element of the same electrode. Both electrodes 1 and 2 are made of wire with a square cross-section. The side length W of this square cross-section is 1.5 mm. The total length of the rectilinear section of the wire forming each electrode 1 and 2 is about 400 mm, wherein, in each electrode 1 and 2, one of the ends, with a length of about 100 mm, is bent at an angle of 180 degrees, forming an elongated "U" shape with the adjacent part of the electrode, having a first arm 3 and a second arm 4. The section of the electrode wire forming the first 3 and second 4 arm of the letter "U" constitutes a resistive element exposed to corrosive agents, while the rectilinear section 5 of the wire, being an elongation of the second arm 4, constitutes a reference resistive element. In order to distinguish the individual fragments of the of the first 1 and second 2 electrode, these fragments have been designated as 3', 4', and 5', and 3", 4" and 5", respectively. The first electrode 1 is used to measure the so-called ordinary corrosion, i.e. resulting in material cavities, while the second electrode 2 is used to measure the so-called hydrogen corrosion, i.e. the level of metal hydrogenation. Consequently, in the probe according to the invention, the arms 3' and 4' of the first electrode 1 constitute the first resistive element exposed to corrosive agents, the rectilinear section 5' of the first electrode 1 constitutes the first reference resistive element, the arms 3" and 4" of the second electrode 2 constitute the second resistive element exposed to corrosive agents, and the rectilinear section 5" of the second electrode 2 constitutes the second reference resistive element. Electrode 1 is made of non-alloy steel with a carbon content not exceeding 0.002% by weight and a manganese content not exceeding 0.05% by weight, whereas the second electrode 2 is made of non-alloy steel with a carbon content in range of 0.4% to 1% by weight and a manganese content not exceeding 0.05% by weight. For example, the first electrode 1 can be made of steel type 06J, 03J, or 04J (Armco 1), and the second electrode 2 can be made of steel type 1.7053 (41Cr4), 1.7225, or 1.6511. Both electrodes 1 and 2 are mechanically embedded in a cylindrical body 6 made of stainless steel, e.g. steel type 1.4301, wherein the arms 3 and 4 of each electrode 1 and 2 are located on one side of the body 6, while the reference resistive elements 5 of the electrodes are located on the other side of the body 6. The body 6 has a form of a cylinder with a diameter D1 of 13 mm and a length L of 10 mm. At its first end, the cylinder has a flange 7 with a diameter D2 of approx. 14 mm. The body 6 has a first 8, second 9, third 10 and fourth 11 through hole, each with a diameter D3 of 2 mm. The axis 12 of each of the holes (8, 9, 10, 11) is parallel to the axis 13 of the body 6. The axes 12 of the holes 8, 9, 10, and 11 are located on a circle with a diameter of 8 mm, coaxial with the axis 13 of the body 6, and evenly spaced every 90 angular degrees. The free end of the first arm 3' of the first electrode 1 is located in the first through hole 8, while the end of the second arm 4' of the first electrode 1 is located in the third through hole 10. The free end of the first arm 3" of the second electrode 2 is located in the second through hole 9, while the end of the second arm 4" of the second electrode 2 is located in the fourth through hole 11. Thus, the first electrode 1 is rotated relative to the second electrode by 90 angular degrees. The body 6 is fitted into the tube 14 made of stainless steel of the same type as the steel of the body 6. The tube 14 surrounds the reference elements 5' and 5" of electrodes 1 and 2 and the starting section of an at least six-conductor signal cable 15, for example of the Olflex EB CY type. The individual wires of the cable 15 are connected to the electrodes 1 and 2 at their ends and at substantially half-length. The space between the electrodes 1 and 2 and the walls of the through holes 8, 9, 10, and 11 and the inner wall of the tube 14 is filled with a two-component epoxy resin, for example of the Belzona 1593 or 1391T type. The filling mounts the electrodes 1 and 2 mechanically in the housing 6 and protects the reference elements 5 and the electrical connections with the cable 15 from corrosive agents. The parts of the electrodes 1 and 2 that protrude from the body 6 are protected from damage by a perforated tubular cover 16, screwed onto the threaded end of the tube 14 adjacent to the body 6, and are also made of the same stainless steel as the body 6. The probe according to the invention is mounted in a known manner to the supervised structure in a place where corrosive agents are present, and the cable 15 is connected to a known measuring system, not shown in the drawing, that measures the electrical resistance of individual resistive elements 3, 4, and 5 of electrodes 1 and 2. A known wireless communication module may be connected to said measurement system, which relays the measurement results to a computer, which archives the received results and, based on said results, calculates the corrosion rate and visualizes it, for example, on a screen display.

The probe according to the invention described above was used to monitor a steel pipeline, made of non-alloy steel with the symbol A109 Grade B. The first electrode 1 in the mentioned probe was made of steel with the symbol 04J, which is essentially pure iron, denoted also as Armco steel, while the second electrode 2 of said probe was made of tool steel with the symbol 41Cr4, sometimes denoted with the symbol 1.7053. Before encasing the probe inside the pipeline, it has been calibrated for rate measurement of both types of corrosion of steel from which the pipeline was made (A109 Grade B). The calibration was a result of exposure tests of both electrodes 1, 2, and more specifically, testing their sections exposed to an environment of demineralised water saturated with hydrogen sulphide gas, sections 3' and 4', and 3" and 4", respectively. Fig.13 shows a change of the pH value of the aqueous solution of hydrogen sulphide acting on the electrodes 1 and 2. During the calibration tests, parameters of the aqueous environment acting on the electrodes 1 and 2 of the calibrated probe were measured, namely the oxygen content, pH value and its conductivity. Apart from the electric resistance corrosimetry (ER) and linear polarization resistance (LPR) measurements of the electrodes 1 and 2, the effect of the mentioned aqueous environment on so called coupons was measured, i.e. metal samples which are subjected to laboratory tests after removing them from corrosive environment after a certain period of time. In the coupons, the level of corrosion cavity was studied and its hydrogenation level was measured using the vacuum extraction technique. The studies allowed developing an algorithm for determining the corrosion and hydrogenation rate of steel type A106 Grade B, based on the resistance measurement (ER) of electrodes 1 and 2 of the probe according to the invention. The measured resistances of both electrodes 1 and 2 were sent to the measuring system in a form of electrical voltages. The current values of these voltages were compared with their values measured before mounting the probe inside the installation, which allowed real-time determination of change in the electrical resistance over time for each electrode 1 and 2. To calculate the change of the resistance for each electrode, the following are recorded:

$Uref_1$ - the initial voltage (before mounting) on section 5, i.e. on its reference resistive element,
$Uref_n$ - the current voltage measured on the reference element 5,
$Ux_1$ - the initial voltage (before mounting) on the resistive element (comprised of sections 3 and 4) exposed to the corrosive environment,
$Ux_n$ - the current voltage measured on the resistive element exposed to the corrosive agents (3 and 4).

That is, for the specific probe, two measurement data series are recorded. Because both electrodes 1 and 2 are made of square wire, the value of its cross-section area is obtained by taking the square value of the of side length of this square. Thus, the initial cross-section area $S_1$ of sections 3 and 4 of the measuring electrode is equal to $S_1 = W_1 \times W_1$, whereas the current area $S_n$ of this cross-section is equal to $S_n = W_n \times W_n$, where $W_1$ is the initial side length of the square of the outline of the cross-section (the thickness of the electrode), and $W_n$ is the current thickness of the electrode, corresponding to the voltage $Ux_1$ measured on this electrode.

The current thickness $W_n$ of the electrode can be calculated using the following formula:

$$W_n = \sqrt{\dfrac{Uref_n \times Ux_1 \times S_1}{Uref_1}{Ux_n}}$$

Given the current thickness of each electrode, allows determining its corrosion cavity

$$\Delta W = W_1 - W_n$$

and conversion corrosion rate $V_{corr}$ (in millimetres per year):

$$V_{corr} = \frac{\Delta W}{T_n}$$

where $T_n$ is the time in years which elapsed from mounting the probe to the current moment. Using the corrosion rate for the current moment for both electrodes 1 and 2, the conversion corrosion rate of the material of the second electrode 2 (i.e. steel 41Cr4) and the conversion corrosion rate of the material of the first electrode (i.e. steel 04J) are determined. Based on the laboratory tests, a relationship of hydrogenation level of steel A109 Grade B as a function of the conversion corrosion rates ratio of the electrodes of the probe according to the invention was determined. This relationship, in a form of a so-called calibration curve, is shown in Fig.14. Hydrogenation on a level of 12 ppm H2 is equivalent to the destruction of the steel element, therefore this value was taken as a state of complete hydrogenation (100%). The calibration curve from Fig.14 and the calculated corrosion rate ratio allow determining the theoretical hydrogenation level of steel, from which the pipeline monitored by the probe according to the invention is made. It was found experimentally that the actual cavity corrosion rate of steel A109 Grade B is equal to 150% of the conversion corrosion rate calculated for the first electrode 1 in the manner described above.

**Claims**

1. A resistive probe for simultaneous measurement of the rate of corrosion causing material cavities and corrosion resulting from hydrogenation, comprising a first (3', 4') and a second (3", 4") resistive element exposed to corrosive agents and respective first (5') and second (5") reference resistive elements isolated from said corrosive agents, wherein the respective resistive elements and the reference resistive elements are connected electrically to each other and are mechanically mounted in a common probe body in said resistive probe, and, during the measurement, have substantially the same temperature, **characterised in that** the first resistive element (3', 4') exposed to corrosive agents and the first reference resistive element (5') are made of non-alloy steel with carbon content not exceeding 0.002% by weight and manganese content not exceeding 0.05% by weight, whereas the second resistive element (3", 4") exposed to corrosive agents and the second reference resistive element (5") are made of non-alloy steel with carbon content in range of 0.4 to 1% by weight and manganese content not exceeding 0.05% by weight.

2. The probe according to claim 1, **characterised in that** all resistive elements are made of wire, the length of the first resistive element (3', 4') exposed to corrosive agents is equal to the length of the first reference resistive element (5'), the cross-section area of the first resistive element (3', 4') exposed to corrosive agents is equal to the cross-section area of the first reference resistive element (5'), the length of the second resistive element (3", 4") exposed to corrosive agents is equal to the length of the second reference resistive element (5"), while the cross-section area of the second resistive element (3", 4") exposed to corrosive agents is equal to the cross-section area of the second reference resistive element (5").

3. The probe according to claim 2, **characterised in that** the cross-section areas of all resistive elements are the same.

4. The probe according to claim 2 or 3, **characterised in that** the lengths of all resistive elements are the same.

5. The probe according to claim 4, **characterised in that** the resistive elements are made of wire with a square cross-section.

6. The probe according to claim 5, **characterised in that** the length of the wire section forming the resistive elements is two hundred and fifty to two hundred and seventy times greater than the length (W) of the side of the square defining the outline of the cross-section of said wire.

7. The probe according to claim 4 or 5 or 6, **characterised in that** the first resistive element (3', 4') exposed to corrosive agents and the first reference resistive element (5') form two parts of the first measuring electrode (1) in a form of a continuous section of wire, whereas the second resistive element (3", 4") exposed to corrosive agents and the second reference resistive element (5") form two parts of the second measuring electrode (2) in a form of a continuous section of wire.

8. The probe according to claim 7, **characterised in that,** in each measuring electrode (1, 2), the resistive element (3', 4', 3", 4") exposed to corrosive agents has an elongated "U" shape, and thus comprises its first (3', 3") and second (4', 4") arm, while the reference resistive element (5',5") has a form of a rectilinear section of wire being an elongation of the second arm of the resistive element exposed to corrosive agents.

9. The probe according to claim 8, **characterised in that** both measuring electrodes (1, 2) are located parallel to each other, wherein the shape and dimensions of both electrodes (1, 2) are the same.

10. The probe according to claim 9, **characterised in that** the measuring electrodes (1, 2) are rotated relative to each other by ninety angular degrees.

11. The probe according to claim 10, **characterised in that** the probe body (6) is formed by a cylindrical member with through holes (8, 9, 10, 11) for the measuring electrodes (1, 2), wherein both arms (3', 4', 3", 4") of each measuring electrode (1, 2) are located on one side of the cylindrical member (6), whereas the reference resistive elements (5', 5") of said electrodes (1, 2) are located on the other side of the cylindrical member (6).

12. The probe according to claim 11, **characterised in that** both reference resistive elements (5', 5") are located inside the tubular member (14) connected to the body (6), wherein the space between the measuring electrodes (1, 2) and the inside of the tubular member (14) and the inside of the through holes (8, 9, 10, 11) of the cylindrical member (6) is filled with an agent resistant to corrosive agents.

13. The probe according to claim 11 or 12, **characterised in that** both arms (3', 4', 3", 4") of both measuring electrodes (1, 2) are located inside a perforated cover (16) connected to the body (6).

14. The probe according to claim 11 or 12 or 13, **characterised in that** the cylindrical member (6) comprises a first (8), second (9), third (10) and fourth (11) through hole, which are arranged evenly around the axis (13) of the cylindrical member (6), wherein the free end of the first arm (3') of the first electrode (1) is located in the first through hole (8), while the end of the second arm (4') of the first electrode (1) is located in the third through hole (10), whereas the free end of the first arm (3") of the second electrode (2) is located in the second through hole (9), while the end of the second arm (4") of the second electrode (2) is located in the fourth through hole (11).

**Patentansprüche**

1. Widerstandssonde zur gleichzeitigen Messung der Korrosionsrate, die Materialhohlräume verursacht, und der durch Hydrierung verursachten Korrosion, die ein erstes Widerstandselement (3', 4') und ein zweites Widerstandselement (3", 4"), die korrosiven Mitteln ausgesetzt sind, und ein entsprechendes erstes Referenzwiderstandselement (5') und zweites Referenzwiderstandselement (5") aufweist, die von den korrosiven Mitteln isoliert sind, wobei die jeweiligen Widerstandselemente und Referenzwiderstandselemente elektrisch miteinander verbunden sind und mechanisch in einem gemeinsamen Sondenkörper in der Widerstandssonde montiert sind und während der Messung im Wesentlichen dieselbe Temperatur haben, **dadurch gekennzeichnet, dass** das erste Widerstandselement (3', 4'), das den korrosiven Mitteln ausgesetzt ist, und das erste Referenzwiderstandselement (5') aus einem unlegierten Stahl bestehen, dessen Kohlenstoffgehalt 0,002 Gew.-% nicht überschreitet und dessen Mangangehalt 0,05 Gew.-% nicht überschreitet, wohingegen das zweite Widerstandselement (3", 4"), das den korrosiven Mitteln ausgesetzt ist, und das zweite Referenzwiderstandselement (5") aus einem unlegierten Stahl bestehen, dessen Kohlenstoffgehalt im Bereich von 0,4 bis 1 Gew.-% liegt und dessen Mangangehalt 0,05 Gew.-% nicht überschreitet.

2. Sonde nach Anspruch 1, **dadurch gekennzeich-** **net, dass** sämtliche Widerstandselemente aus Draht bestehen, wobei die Länge des ersten Widerstandselements (3', 4'), das den korrosiven Mitteln ausgesetzt ist, gleich der Länge des ersten Referenzwiderstandselements (5') ist, wobei die Querschnittsfläche des ersten Widerstandselements (3', 4'), das den korrosiven Mitteln ausgesetzt ist, gleich der Querschnittsfläche des ersten Referenzwiderstandselements (5') ist, wobei die Länge des zweiten Widerstandselements (3", 4"), das den korrosiven Mitteln ausgesetzt ist, gleich der Länge des zweiten Referenzwiderstandselements (5") ist, während die Querschnittsfläche des zweiten Widerstandselements (3", 4"), das den korrosiven Mitteln ausgesetzt ist, gleich der Querschnittsfläche des zweiten Referenzwiderstandselements (5") ist.

3. Sonde nach Anspruch 2, **dadurch gekennzeichnet, dass** die Querschnittsflächen sämtlicher Widerstandselemente gleich sind.

4. Sonde nach Anspruch 2 oder 3, **dadurch gekennzeichnet, dass** die Längen sämtlicher Widerstandselemente gleich sind.

5. Sonde nach Anspruch 4, **dadurch gekennzeichnet, dass** die Widerstandselemente aus Draht mit einem quadratischen Querschnitt bestehen.

6. Sonde nach Anspruch 5, **dadurch gekennzeichnet, dass** die Länge des Drahtabschnitts, der die Widerstandselemente bildet, zweihundertfünfzig bis zweihundertsiebzig Mal größer ist als die Länge (W) der Seite des Quadrats, das die Kontur des Querschnitts des Drahts definiert.

7. Sonde nach Anspruch 4 oder 5 oder 6, **dadurch gekennzeichnet, dass** das erste Widerstandselement (3', 4'), das den korrosiven Mitteln ausgesetzt ist, und das erste Referenzwiderstandselement (5') zwei Teile der ersten Messelektrode (1) in einer Form eines durchgehenden Drahtabschnitts bilden, wohingegen das zweite Widerstandselement (3", 4"), das den korrosiven Mitteln ausgesetzt ist, und das zweite Referenzwiderstandselement (5") zwei Teile der zweiten Messelektrode (2) in einer Form eines durchgehenden Drahtabschnitts bilden.

8. Sonde nach Anspruch 7, **dadurch gekennzeichnet, dass** in jeder Messelektrode (1, 2) das Widerstandselement (3', 4', 3", 4"), das den korrosiven Mitteln ausgesetzt ist, eine längliche "U"-Form hat und somit seinen ersten Arm (3', 3") und zweiten Arm (4', 4") aufweist, während das Referenzwiderstandselement (5', 5") eine Form eines geradlinigen Drahtabschnitts hat, der eine Verlängerung des zweiten Arms des Widerstandselements ist, das den korrosiven Mitteln ausgesetzt ist.

9. Sonde nach Anspruch 8, **dadurch gekennzeichnet, dass** sich beide Messelektroden (1, 2) parallel zueinander befinden, wobei die Form und Abmessungen beider Elektroden (1, 2) gleich sind.

10. Sonde nach Anspruch 9, **dadurch gekennzeichnet, dass** die Messelektroden (1, 2) relativ zueinander um neunzig Winkelgrad gedreht werden.

11. Sonde nach Anspruch 10, **dadurch gekennzeichnet, dass** der Sondenkörper (6) durch ein zylindrisches Element mit Durchgangslöchern (8, 9, 10, 11) für die Messelektroden (1, 2) gebildet wird, wobei sich beide Arme (3', 4', 3", 4") jeder Messelektrode (1, 2) auf einer Seite des zylindrischen Elements (6) befinden, wohingegen sich die Referenzwiderstandselemente (5', 5") der Elektroden (1, 2) auf der anderen Seite des zylindrischen Elements (6) befinden.

12. Sonde nach Anspruch 11, **dadurch gekennzeichnet, dass** sich beide Referenzwiderstandelemente (5', 5") in dem rohrförmigen Element (14) befinden, das mit dem Körper (6) verbunden ist, wobei der Raum zwischen den Messelektroden (1, 2) und dem Inneren des rohrförmigen Elements (14) und dem Inneren der Durchgangslöcher (8, 9, 10, 11) des zylindrischen Elements (6) mit einem Mittel gefüllt ist, das gegen korrosive Mittel beständig ist.

13. Sonde nach Anspruch 11 oder 12, **dadurch gekennzeichnet, dass** sich beide Arme (3', 4', 3", 4") beider Messelektroden (1, 2) in einer perforierten Abdeckung (16) befinden, die mit dem Körper (6) verbunden ist.

14. Sonde nach Anspruch 11 oder 12 oder 13, **dadurch gekennzeichnet, dass** das zylindrische Element (6) ein erstes Durchgangsloch (8), ein zweites Durchgangsloch (9), ein drittes Durchgangsloch (10) und ein viertes Durchgangsloch (11) aufweist, die gleichmäßig um die Achse (13) des zylindrischen Elements (6) angeordnet sind, wobei sich das freie Ende des ersten Arms (3') der ersten Elektrode (1) in dem ersten Durchgangsloch (8) befindet, während sich das Ende des zweiten Arms (4') der ersten Elektrode (1) in dem dritten Durchgangsloch (10) befindet, wohingegen sich das freie Ende des ersten Arms (3") der zweiten Elektrode (2) in dem zweiten Durchgangsloch (9) befindet, während sich das Ende des zweiten Arms (4") der zweiten Elektrode (2) in dem vierten Durchgangsloch (11) befindet.

**Revendications**

1. Sonde résistive de mesure simultanée du taux de corrosion provoquant des cavités de matériau et de la corrosion consécutive à une hydrogénation, comprenant des premier (3', 4') et second (3", 4") éléments résistifs exposés à des agents corrosifs et des premier (5') et second (5") éléments résistifs de référence respectifs isolés desdits agents corrosifs, dans laquelle les éléments résistifs respectifs et les éléments résistifs de référence sont connectés électriquement les uns aux autres et sont montés mécaniquement dans un corps de sonde commun dans ladite sonde résistive, et pendant la mesure, ont sensiblement la même température, **caractérisée en ce que** le premier élément résistif (3', 4') exposé à des agents corrosifs et le premier élément résistif de référence (5') sont constitués d'un acier non allié ayant une teneur en carbone ne dépassant pas 0,002 % en poids et une teneur en manganèse ne dépassant pas 0,05 % en poids, alors que le second élément résistif (3", 4") exposé à des agents corrosifs et le second élément résistif de référence (5") sont constitués d'un acier non allié ayant une teneur en carbone s'inscrivant dans une plage de 0,4 à 1 % en poids et une teneur en manganèse ne dépassant pas 0,05 % en poids.

2. Sonde selon la revendication 1, **caractérisée en ce que** tous les éléments résistifs sont constitués de fil, la longueur du premier élément résistif (3', 4') exposé à des agents corrosifs est égale à la longueur du premier élément résistif de référence (5'), la superficie de section transversale du premier élément résistif (3', 4') exposé à des agents corrosifs est égale à la superficie de section transversale du premier élément résistif de référence (5'), la longueur du second élément résistif (3", 4") exposé à des agents corrosifs est égale à la longueur du second élément résistif de référence (5"), tandis que la superficie de section transversale du second élément résistif (3", 4") exposé à des agents corrosifs est égale à la superficie de section transversale du second élément résistif de référence (5").

3. Sonde selon la revendication 2, **caractérisée en ce que** les superficies de section transversale de tous les éléments résistifs sont les mêmes.

4. Sonde selon la revendication 2 ou la revendication 3, **caractérisée en ce que** les longueurs de tous les éléments résistifs sont les mêmes.

5. Sonde selon la revendication 4, **caractérisée en ce que** les éléments résistifs sont constitués d'un fil ayant une section transversale carrée.

6. Sonde selon la revendication 5, **caractérisée en ce que** la longueur de la section de fil formant les éléments résistifs est deux cent cinquante à deux cent soixante-dix fois plus grande que la longueur (W) du côté du carré définissant le contour de la section transversale dudit fil.

7. Sonde selon la revendication 4, la revendication 5 ou la revendication 6, **caractérisée en ce que** le premier élément résistif (3', 4') exposé à des agents corrosifs et le premier élément résistif de référence (5') forment deux parties de la première électrode de mesure (1) sous la forme d'une section continue de fil, alors que le second élément résistif (3", 4") exposé à des agents corrosifs et le second élément résistif de référence (5") forment deux parties de la seconde électrode de mesure (2) sous la forme d'une section continue de fil.

8. Sonde selon la revendication 7, **caractérisée en ce que**, dans chaque électrode de mesure (1, 2), l'élément résistif (3', 4', 3", 4") exposé à des agents corrosifs a une forme de « U » allongé et comprend ainsi son premier (3', 3") et second (4', 4") bras, tandis que l'élément résistif de référence (5', 5") a une forme de section rectiligne de fil qui est un prolongement du second bras de l'élément résistif exposé à des agents corrosifs.

9. Sonde selon la revendication 8, **caractérisée en ce que** les deux électrodes de mesure (1, 2) sont situées parallèles l'une à l'autre, dans laquelle la forme et les dimensions des deux électrodes (1, 2) sont les mêmes.

10. Sonde selon la revendication 9, **caractérisée en ce que** les électrodes de mesure (1, 2) sont tournées l'une par rapport à l'autre de quatre-vingt-dix degrés angulaires.

11. Sonde selon la revendication 10, **caractérisée en ce que** le corps de sonde (6) est formé par un élément cylindrique pourvu de trous traversants (8, 9, 10, 11) destinés aux électrodes de mesure (1, 2), dans laquelle les deux bras (3', 4', 3", 4") de chaque électrode de mesure (1, 2) sont situés d'un côté de l'élément cylindrique (6), alors que les éléments résistifs de référence (5', 5") desdites électrodes (1, 2) sont situés de l'autre côté de l'élément cylindrique (6).

12. Sonde selon la revendication 11, **caractérisée en ce que** les deux éléments résistifs de référence (5', 5") sont situés à l'intérieur de l'élément tubulaire (14) relié au corps (6), dans laquelle l'espace entre les électrodes de mesure (1, 2) et l'intérieur de l'élément tubulaire (14) et l'intérieur des trous traversants (8, 9, 10, 11) de l'élément cylindrique (6) est rempli d'un agent résistant à des agents corrosifs.

13. Sonde selon la revendication 11 ou la revendication 12, **caractérisée en ce que** les deux bras (3', 4', 3", 4") des deux électrodes de mesure (1, 2) sont situés à l'intérieur d'un couvercle perforé (16) relié au corps (6).

14. Sonde selon la revendication 11, ou la revendication 12 ou la revendication 13, **caractérisée en ce que** l'élément cylindrique (6) comprend des premier (8), deuxième (9), troisième (10) et quatrième (11) trous traversants, qui sont ménagés uniformément autour de l'axe (13) de l'élément cylindrique (6), dans laquelle l'extrémité libre du premier bras (3') de la première électrode (1) est située dans le premier trou traversant (8), tandis que l'extrémité du second bras (4') de la première électrode (1) est située dans le troisième trou traversant (10), alors que l'extrémité libre du premier bras (3") de la seconde électrode (2) est située dans le deuxième trou traversant (9), tandis que l'extrémité du second bras (4") de la seconde électrode (2) est située dans le quatrième trou traversant (11).

Fig.1

Fig.2

Fig.3

Fig.4

Fig.5

Fig.6

Fig.8

Fig.7

EP 4 211 442 B1

4',4''

3',3''

A—A

1,2

5',5''

Fig.9

W

W

A-A

Fig.10

13

6

D2

D3

D1

8

L

12

Fig.11

12

6

12

12

12

13

8

Fig.12

EP 4 211 442 B1

13

Fig.13

Fig.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6919729 B2
- GB 850064 A
- GB 215300 A
- WO 8303007 A

### Non-patent literature cited in the description

- **COSASCO**. *ER) Electrical Resistance Probes*, 17 May 2016
- **A I MARSHAKOW et al.** Monitoring of external corrosion of buried pipelines. *Journal of Corrosion Science and Engineering*